# EUROPEAN PATENT SPECIFICATION

(11) **EP 4 060 484 B1**
(45) Date of publication and mention of the grant of the patent: **20.05.2026**
(21) Application number: 20906907.9
(22) Date of filing: 02.12.2020
(51) Int. Cl.: G06F 8/71, G06F 8/76, G06F 9/445

(54) **CONTROL METHOD AND CONTROL DEVICE FOR ENABLING OPERATIONS OF APPLICATION PROGRAM IN MULTIPLE SYSTEMS**
VERFAHREN UND VORRICHTUNG ZUR STEUERUNG DES BETRIEBS EINES ANWENDUNGSPROGRAMMS IN MEHREREN SYSTEMEN
PROCÉDÉ DE COMMANDE ET DISPOSITIF DE COMMANDE POUR PERMETTRE DES OPÉRATIONS D'UN PROGRAMME D'APPLICATION DANS DE MULTIPLES SYSTÈMES

(30) Priority: 27.12.2019 CN 201911376515
(43) Date of publication of application: 21.09.2022
(73) Proprietor: Zhuhai Pantum Electronics Co., Ltd., Zhuhai, Guangdong 519055 (CN)
(72) Inventor: LI, Jiade, Zhuhai, Guangdong 519055 (CN); SUN, Taolin, Zhuhai, Guangdong 519055 (CN)
(74) Representative: Botti & Ferrari S.p.A.
(86) International application number: PCT/CN2020/133318
(87) International publication number: WO 2021/129331

(56) References cited:
- CN-A- 1 794 172
- CN-A- 103 197 964
- CN-A- 103 309 754
- CN-A- 106 201 570
- CN-A- 111 176 720
- US-A1- 2017 364 347

## Description

### TECHNICAL FIELD

The present disclosure relates to a control method, a control device and a mobile terminal for enabling operations of an application program in multiple systems.

### BACKGROUND

At present, different types or versions of operating systems usually can be installed on a same mobile terminal (such as a mobile phone). For example, based on an original Android operating system, various other operating systems of different types can be derived and installed on a same mobile terminal. Some of the various systems have inconsistent interfaces. For example, some new operating systems have performed various deletion operations or expansion operations on an original Android operating system, have reduced or merged API interfaces, and added various new API interfaces, so that the software and hardware functions are more concise or richer. However, application program APK packages (i.e., the installation packages) developed based on standard Android SDK can only be run in an original operating system, and cannot be run in a new operating system. The patent application US2017364347A1, which discloses selectively migrating applications during an operating system upgrade, is considered as a prior art document.

### SUMMARY

In order to solve such a compatibility problem that an application program cannot be compatible in multiple systems better, the embodiments of the present disclosure provide a control method, a control device and a mobile terminal for enabling operations of an application program in multiple systems.

In one aspect, an embodiment of the present disclosure provides a control method for enabling operations of an application program in multiple systems, and the control method is applicable to a mobile phone including at least a first operating system and a second operating system, the control method includes:
acquiring system information of the second operating system when starting an application program in the second operating system of the mobile phone, the system information including a directory structure and a system level of the second operating system;
determining whether association information between the application program and the second operating system exists; and if association information does not exist, creating a storage partition for the application program in the second operating system according to the system information; when the storage partition is successfully created, and creating association information between the application program and the second operating system according to the system information; creating an operation configuration folder required for running the application program in the second operating system in the storage partition, and storing data required for running the application program in the second operating system in the operation configuration folder, such that the second operating system is capable of identifying the application program; and if association information exists, but the acquired system level and the acquired directory structure of the second operating system do not match the association information because the acquired system information is of the first operating system, creating a storage partition for the application program in the second operating system according to a directory structure stored in the association information; and
running the application program in the second operating system.

In another aspect, an embodiment of the present disclosure provides a control device for enabling operations of an application program in multiple systems, and the control device includes at least a first operating system and a second operating system, and further includes:
an acquisition module configured to acquire system information of the second operating system when starting an application program in the second operating system of the control device, the system information including a directory structure and a system level of the second operating system;
a creation module configured to: if it is determined that association information between the application program and the second operating system does not exist, create a storage partition for the application program in the second operating system according to the system information; when the storage partition is successfully created, create association information between the application program and the second operating system according to the system information, creating an operation configuration folder required for running the application program in the second operating system in the storage partition, and storing data required for running the application program in the second operating system in the operation configuration folder, such that the second operating system is capable of identifying the application program; and if it is determined that association information exists, but the acquired system level and the acquired directory structure of the second operating system do not match the association information because the acquired system information is of the first operating system, create a storage partition for the application program in the second operating system according to a directory structure stored in the association information; and
a running module configured to run the application program in the second operating system.

In another aspect, an embodiment of the present disclosure provides a mobile terminal including the control device as described above.

In another aspect, an embodiment of the present disclosure provides a readable storage medium storing a computer program, and the computer program is configured to implement the control method described above when executed by a processor.

According to the control method, the control device and the mobile terminal provided by the present disclosure, an application program can be compatible in multiple operating systems, such that the application program can acquire system information in different operating system environments and generate operation configuration data corresponding to the operating system according to the system information and association information, thereby meeting a compatibility requirement in a multi-system environment without requiring developers of application programs to develop different installation packages for different operating systems, and thus facilitating maintenance and upgrade of the application program, and facilitating users to flexibly use the application program in different operating systems.

### BRIEF DESCRIPTION OF DRAWINGS

In order to better illustrate the technical solutions of the embodiments of the present disclosure, accompanying drawings used in the embodiments are briefly described in the following description. It should be noted that, the accompanying drawings in the following description merely illustrate some, rather than all, of the embodiments of the present disclosure. For those skilled in the art, other drawings can be obtained from these drawings without any creative effort.
FIG. 1 is a schematic flowchart of a control method according to Embodiment I of the present disclosure;
FIG. 2 is a specific schematic flowchart of the control method according to Embodiment I of the present disclosure; and
FIG. 3 is a schematic flowchart of a control method according to Embodiment II of the present disclosure.

### DESCRIPTION OF EMBODIMENTS

In order to better illustrate the technical solutions of the present disclosure, the embodiments of the present disclosure are described in detail below with reference to the accompanying drawings.

It should be noted that the described embodiments are merely some, rather than all, of the embodiments of the present disclosure. Based on these embodiments in the present disclosure, all other embodiments obtained by those skilled in the art without any creative effort fall within a protection scope of the present disclosure.

### Embodiment I

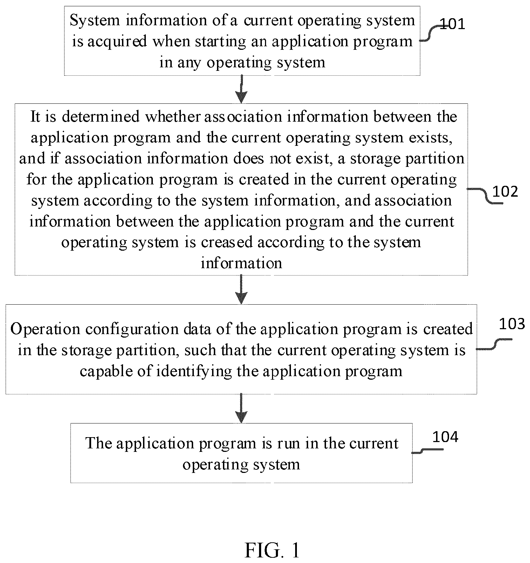

An embodiment of the present disclosure provides a control method for enabling operations of an application program in multiple systems. The control method is applicable to an electronic device including at least a first operating system and a second operating system. As shown in FIG. 1 , the control method includes following steps.

At S101, system information of a current operating system is acquired when starting an application program in any operating system. Specifically, the system information includes a system level, a directory structure, etc.

At S102, it is determined whether association information between the application program and the current operating system exists, and if association information does not exist, a storage partition for the application program is created in the current operating system according to the system information, and association information between the application program and the current operating system is creased according to the system information.

At S103, operation configuration data of the application program is created in the storage partition, such that the current operating system is capable of identifying the application program.

At S104, the application program is run in the current operating system.

According to the control method of the present disclosure, operation configuration data required for running the application program on any operating system can be created before an application program is run, thereby being compatible in multiple operating systems, and being capable of successfully running in multiple operating systems.

In addition, the control method of the present disclosure may first perform the determination process in step 102, and then perform the above-mentioned step 101 to acquire the system information if the determination result is that association information does not exist.

According to the invention, in step 103, creating the operation configuration data of the application program in the storage partition includes: creating an operation configuration folder required for running the application program in the current operating system, and storing data required for running the application program in the operation configuration folder. Creating the operation configuration folder of the application program in the operating system and storing the data required for running the application program in the operation configuration folder can ensure that a folder and a file required for running the application program can be created according to the directory structure of these operating systems dynamically in real time when the application program is not developed according to the API interface mechanism of some operating systems in multiple systems, so that the application program is compatible in multiple operating systems.

In addition, in step 102, when the storage partition of the application program can be created in the current operating system according to the acquired system information and the storage partition is successfully created, the association information between the application program and the current operating system is created according to the system information. If it fails to create the storage partition, it indicates that the acquired system information may be incorrect. For example, when the application program is developed according to the first operating system and started in the second operating system, the system information acquired through the standard API interface may include the directory structure of the first operating system. In this case, when the directory structure of the second operating system is different from the directory structure of the first operating system, the operation configuration data that already exists in the second operating system cannot be acquired or the operation configuration data required for running the application program cannot be created according to the directory structure of the first operating system.

In order to solve the problem that the acquired directory structure may be incorrect, the control method in the present disclosure further includes: if association information exists but the acquired system level and the acquired directory structure of the current operating system do not match the association information, a storage partition for the application program is created in the current operating system according to the directory structure in the association information.

The existing electronic device has multiple operating systems. After the application program has been installed and run in the first operating system, the application program can also be shared from the first operating system to the second operating system. If the application program is developed only for the first operating system, in the prior art, when the user shares the application program to the second operating system, the application program cannot be run in the second operating system, causing confusion and inconvenience to the user. According to the embodiments of the present disclosure, when the application program is shared or installed in the second operating system and started in the second operating system, data required for running the application program can be created according to the acquired system information of the second operating system, such that the application program would be compatible in the second operating system.

For example, on a mobile phone having an Android system, there are two operating systems. one of the two operating systems is a main system, and the other one of the two operating systems is an auxiliary system. An application program in the main system can be shared to the auxiliary system. However, in the prior art, an application program developed by a third party cannot be run successfully when it is shared to the auxiliary system, and an running error or an running failure occurs, or some functions fail to run. Because most of the application programs developed by a third party merely consider a mobile phone having only system on the market, as a result, the application program fail to be compatible in two operating systems and would fail to be run in one of the two operating systems when the application program is run on a mobile phone having two operating systems.

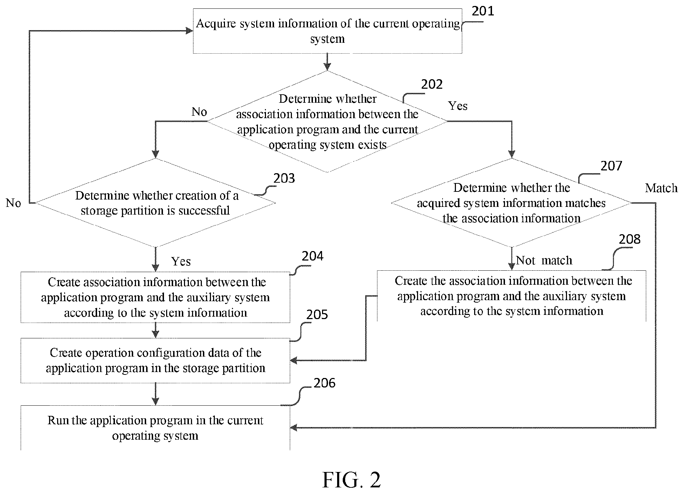

In order to solve the above problems, assuming that the application program is started in the auxiliary system, the control method provided by an embodiment of the present disclosure is as shown in FIG. 2, and includes the following steps.

At step 201, the system information of the current operating system is acquired. The system information is the system level and the directory structure. For example, for an Android phone having two systems, i.e., a main system and an auxiliary system, the directory structure of the main system is storage/emulated/0/ and the system level of the main system of the Android phone is 1, and the directory structure of the auxiliary system is mnt/sdcard0/ and the system level of the auxiliary system is 2. According to the directory structure, the operation configuration data of each application program that has been run successfully can be found. When the application program is started in the auxiliary system, the system level of the auxiliary system is acquired and the directory structure of the auxiliary system is acquired.

At step 202, it is determined whether association information between the application program and the current operating system exists. There will be three cases. One of the three cases is that the existing association information includes only system information of the main system and a name, a version, running time, and the like of the application program, and the existing association information does not include association information between the application program and the auxiliary system, that is, the determination result is "no", then the procedure proceeds to a step 203. Another one of the three cases is that the existing association information includes a system level and a directory structure of the auxiliary system, then the determination result is "yes", then the procedure proceeds to a step 207. The other one of the three case is that association information does not exist at all, that is, the determination result is "no", then the procedure proceeds to a step 203.

At step 203, if association information between the application program and the current operating system does not exist, a storage partition is created in the auxiliary system according to the acquired system information, and it is determined whether the creation is successful. For example, when the application program is started in the auxiliary system, the directory structure acquired according to the application program developed by the main system may be storage/emulated/0/, because the main system and the auxiliary system of the two systems are independent from each other, the auxiliary system cannot access a storage area of the main system and cannot create the storage partition of the application program according to the directory structure of the main system. This determination step aims at solving a problem that the creation of the storage partition fails because the acquired directory structure is incorrect.

At step 204, when the storage partition can be created successfully, it indicates that the acquired system information matches the current auxiliary system, then association information between the application program and the auxiliary system is created according to the system information. For example, an association table or an association file is stored in a public area accessible by both the main system and the auxiliary system of an Android mobile phone, and association information between the current operating system and the application program is included in the association table or the association file and includes the system level and the directory structure of the current operating system and the name, the version, the creation time and the like of the application program. In addition, the association information can be stored in a single storage area of each operating system, or be stored in an external server by the Android phone. Once performing step 202, the association information is searched from the external server. The storage of the association information can ensure that the application program is run successfully in the current operating system according to the correct directory structure, such that a storage partition can be created in the current operating system for the first time the application program is run successfully, and the application program can be run when it is started for the next time.

At step 203, if the determination result is that the creation of the storage partition fails, it indicates that the acquired system information cannot match the current auxiliary system, then the process proceeds to step 201 to acquire system information again through a different method or manner until a storage partition in the current auxiliary system can be created successfully or the application program can be run successfully.

Step 205 is the same as the above-mentioned step 103, and step 206 is the same as the above-mentioned step 104, which will not be further described herein.

At step 207, if association information exists and the association information includes the acquired system level, the association information is compared with the acquired system information to determine whether the acquired system information matches the association information. For example, for determining whether the acquired system information matches the association information, there would be two results. One of the two results is that the system information of the auxiliary system is included in the association information, but the directory structure acquired in step 201 is different from the directory structure of the auxiliary system in the association information. What the application program acquires through the standard API interface may be the directory structure of the main system and the system level of the auxiliary system, and in the prior art, there is an error in the acquired directory structure. As a result, the application program cannot be run in the auxiliary system. At this time, the determination result is "not match", then the procedure proceeds to step 208. At step 208, the storage partition of the application program is created according to the association information, for example, the storage partition of the application program is created according to the directory structure of the auxiliary system in the association information. The other one of the two results is that the association information completely matches the acquired system information. For example, the acquired system level and directory structure of the auxiliary system are in consistence with the system level and the directory structure of the auxiliary system stored in the association information, it indicates that the application program was once capable of creating a storage partition or being run successfully in the auxiliary system. At this time, the determination result is "match", then the procedure proceeds to step 206. For example, at step 206, the storage partition of the application program in the auxiliary system is directly accessed according to the association information to run the data of the application program.

According to the embodiments of the present disclosure, when an application program is started in any operating system, system information of any operating system is acquired, for example, the directory structure and the system level is acquired. The directory structure can represent a storage path where the operation configuration data required for each application program is stored in each operating system. In a mobile phone having multiple systems, the directory structure of each operating system is different from one another, and the respective storage areas are independent from each other. After the system information is acquired, the association information is compared with the system information, then different processing is performed according to the comparison results to ensure that the application program can be run successfully in the current operating system. If association information between the application program and a certain operating system is included in the association information, it indicates that the application program can be run in the operating system or has been run in the operating system, or the application program can correctly acquire information such as the directory structure of the operating system. The operation configuration data required by different application programs may be slightly different from each other. For example, when an application program related to mobile printing is run on an Android phone, an initialization folder (such as a config folder) needs to be created in the operating system, and an initialization file (such as AppDB.db) is created in the initialization file.

### Embodiment II

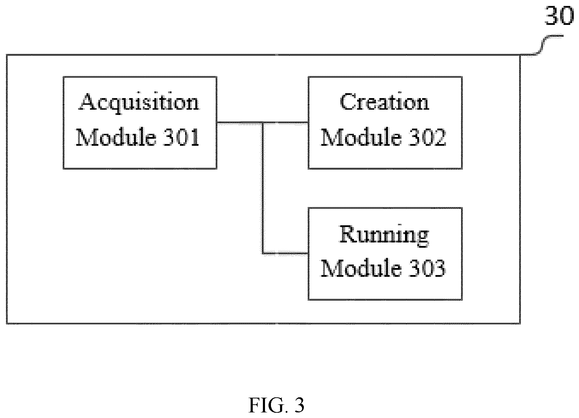

An embodiment of the present disclosure further provides a control device 30 including at least a first operating system and a second operating system. As shown in FIG. 3, the control device 30 includes an acquisition module 301, a creation module 302 and a running module 303.

The acquisition module 301 is configured to acquire system information of a current operating system when starting an application program in any operating system. Acquiring the system information of the current operating system includes: acquiring a system level and a directory structure of the current operating system.

The creation module 302 is configured to create a storage partition for the application program in the current operating system according to the system information and create association information between the application program and the current operating system according to the system information if it is determined that association information between the application program and the current operating system does not exist; and create operation configuration data of the application program in the storage partition, such that the current operating system is capable of identifying the application program.

The running module 303 is configured to run the application program in the current operating system.

According to the control device of the present disclosure, when the application program is started, data required for running the application program can be created, and the application program can be compatible in multiple operating systems and can be successfully run on devices having multiple operating systems. In this way, there is no need to develop different installation packages for different operating systems, thereby facilitating convenient and quick maintenance of the application program.

Creating the operation configuration data of the application program in the storage partition includes: creating an operation configuration folder required for running the application program in the current operating system, and storing data required for running the application program in the operation configuration folder. When an application program is started in multiple operating systems, for the sake of successful running, it needs to acquire system information, define an operation configuration folder in the current operating system, and store running data, such that data required for running the application program can be dynamically created according to a system level and a directory structure of the current operating system.

Further, the creation module 302 is further configured to: if association information exists but an acquired system level and an acquired directory structure of the current operating system do not match the association information, create a storage partition for the application program in the current operating system according to a directory structure in the association information. According to the control device of the present disclosure, it can avoid that running of the application program fails when the acquired directory structure is incorrect. Therefore, the application program can be compatible in multiple operating systems, without needing to develop different packages adapted to the multiple operating systems.

The same parts of this embodiment as those of embodiment I will not be repeated herein.

An embodiment of the present disclosure further provides a mobile terminal including the control device of the embodiment described above.

According to the mobile terminal of the present disclosure, the application program can be installed on a mobile phone having only one operating system, and when the mobile phone becomes to have multiple operating systems, there is no need to develop multiple installation packages for the application program, thereby facilitating maintenance and upgrade of the application program.

An embodiment of the present disclosure further provides a readable storage medium where a computer program is stored. When executed by a processor, the computer program is used to implement the method provided by each embodiment described above.

The readable storage medium may be a computer storage medium or a communication medium. The communication medium includes any medium that facilitates transferring a computer program from one place to another. The computer storage medium can be any available medium that can be accessed by a general-purpose or special-purpose computer. For example, a readable storage medium is coupled to a processor such that the processor can read information from, and write information to, the readable storage medium. Of course, the readable storage medium may also be a part of the processor. The processor and the readable storage medium may be arranged in application program specific integrated circuits (ASIC). Alternatively, the ASIC may be arranged in the user equipment. Of course, the processor and the readable storage medium may also be arranged in a communication device as separate components.

An embodiment of the present disclosure further provides a program product including execution instructions stored in a readable storage medium. At least one processor of the device can read the execution instructions from the readable storage medium, and the execution instructions are executed by at least one processor to cause the device to implement the control methods provided by each embodiment described above.

It should be understood that the processor may be a central processing unit (CPU), and another general-purpose processor, a digital signal processors (DSP), an application program specific integrated circuit (ASIC), etc. The general-purpose processor may be a microprocessor. Alternatively, the processor may be any conventional processor or the like. The steps in combination with the method disclosed in the present disclosure can be directly embodied as executed by a hardware processor, or executed by a combination of hardware and software modules in the processor.

The above-described embodiments are merely preferred embodiments of the present disclosure and are not intended to limit the present disclosure.

## Claims

1. A control method for enabling operations of an application program in multiple systems, wherein the control method is applicable to a mobile phone comprising at least a first operating system and a second operating system, and the control method comprises:
(101), acquiring system information of the second operating system when starting an application program in the second operating system of the mobile phone, wherein the system information comprises a directory structure and a system level of the second operating system; (102), determining whether association information between the application program and the second operating system exists; when association information does not exist, creating a storage partition for the application program in the second operating system according to the system information, and when the storage partition is successfully created, creating association information between the application program and the second operating system according to the system information; and when association information exists, but the acquired system level and the acquired directory structure of the second operating system do not match the association information because the acquired system information is of the first operating system, creating a storage partition for the application program in the second operating system according to a directory structure stored in the association information; and
(103), creating an operation configuration folder required for running the application program in the second operating system in the storage partition, and storing data required for running the application program in the second operating system in the operation configuration folder, such that the second operating system is capable of identifying the application program; and
(104), running the application program in the second operating system.

2. A control device for enabling operations of an application program in multiple systems, wherein the control device comprises at least a first operating system and a second operating system, and further comprises:
an acquisition module (301) configured to acquire system information of the second operating system when starting an application program in the second operating system of the control device, wherein the system information comprises a directory structure and a system level of the second operating system;
a creation module (302) configured to: when it is determined that association information between the application program and the second operating system does not exist, create a storage partition for the application program in the second operating system according to the system information; when the storage partition is successfully created, create association information between the application program and the second operating system according to the system information, create an operation configuration folder required for running the application program in the second operating system in the storage partition, and store data required for running the application program in the second operating system in the operation configuration folder, such that the second operating system is capable of identifying the application program; and when it is determined that association information exists, but the acquired system level and the acquired directory structure of the second operating system do not match the association information because the acquired system information is of the first operating system, create a storage partition for the application program in the second operating system according to a directory structure stored in the association information; and
a running module (303) configured to run the application program in the second operating system.

3. A mobile terminal comprising the control device according to claim 2.

4. A readable storage medium storing a computer program, wherein the computer program, when executed by a processor, is configured to implement the control method according to claim 1.

## Patentansprüche

1. Steuerverfahren zum Ermöglichen von Operationen eines Anwendungsprogramms in mehreren Systemen, wobei das Steuerverfahren auf ein Mobiltelefon anwendbar ist, das wenigstens ein erstes Betriebssystem und ein zweites Betriebssystem umfasst, und das Steuerverfahren umfasst:
(101), Erfassen einer Systeminformation des zweiten Betriebssystems beim Starten eines Anwendungsprogramms in dem zweiten Betriebssystem des Mobiltelefons, wobei die Systeminformation eine Directory-Struktur und ein System-Level des zweiten Betriebssystems umfasst; (102), Bestimmen, ob eine Assoziationsinformation zwischen dem Anwendungsprogramm und dem zweiten Betriebssystem existiert; wenn keine Assoziationsinformation existiert, Erstellen einer Speicher-Partition für das Anwendungsprogramm in dem zweiten Betriebssystem gemäß der Systeminformation, und wenn die Speicher-Partition erfolgreich erstellt worden ist, Erstellen einer Assoziationsinformation zwischen dem Anwendungsprogramm und dem zweiten Betriebssystem gemäß der Systeminformation; und wenn eine Assoziationsinformation existiert, aber das erfasste System-Level und die erfasste Directory-Struktur des zweiten Betriebssystems nicht mit der Assoziationsinformation zusammenpassen, weil die erfasste Systeminformation von dem ersten Betriebssystem ist, Erstellen einer Speicher-Partition für das Anwendungsprogramm in dem zweiten Betriebssystem gemäß einer in der Assoziationsinformation gespeicherten Directory-Struktur; und
(103), Erstellen eines Operationskonfigurationsordners, der zum Ausführen des Anwendungsprogramms in dem zweiten Betriebssystem in der Speicher-Partition erforderlich ist, und Speichern von Daten, die zum Ausführen des Anwendungsprogramms in dem zweiten Betriebssystem erforderlich sind, in dem Operationskonfigurationsordner, so das das zweite Betriebssystem in der Lage ist, das Anwendungsprogramm zu identifizieren; und
(104), Ausführen des Anwendungsprogramms in dem zweiten Betriebssystem.

2. Steuervorrichtung zum Ermöglichen von Operationen eines Anwendungsprogramms in mehreren Systemen, wobei die Steuervorrichtung wenigstens ein erstes Betriebssystem und ein zweites Betriebssystem umfasst, und ferner umfasst:
ein Erfassungsmodul (301), das dazu konfiguriert ist, eine Systeminformation des zweiten Betriebssystems beim Starten eines Anwendungsprogramms in dem zweiten Betriebssystem der Steuervorrichtung zu erfassen, wobei die Systeminformation eine Directory-Struktur und ein System-Level des zweiten Betriebssystems umfasst;
ein Erstellungsmodul (302), das dazu konfiguriert ist: wenn bestimmt wird, dass keine Assoziationsinformation zwischen dem Anwendungsprogramm und dem zweiten Betriebssystem existiert, eine Speicher-Partition für das Anwendungsprogramm in dem zweiten Betriebssystem gemäß der Systeminformation zu erstellen; wenn die Speicher-Partition erfolgreich erstellt worden ist, eine Assoziationsinformation zwischen dem Anwendungsprogramm und dem zweiten Betriebssystem gemäß der Systeminformation zu erstellen, einen Operationskonfigurationsordner zu erstellen, der zum Ausführen des Anwendungsprogramms in dem zweiten Betriebssystem in der Speicher-Partition erforderlich ist, und Daten, die zum Ausführen des Anwendungsprogramms in dem zweiten Betriebssystem erforderlich sind, in dem Operationskonfigurationsordner zu speichern, so das das zweite Betriebssystem in der Lage ist, das Anwendungsprogramm zu identifizieren; und wenn bestimmt wird, dass eine Assoziationsinformation existiert, aber das erfasste System-Level und die erfasste Directory-Struktur des zweiten Betriebssystems nicht mit der Assoziationsinformation zusammenpassen, weil die erfasste Systeminformation von dem ersten Betriebssystem ist, eine Speicher-Partition für das Anwendungsprogramm in dem zweiten Betriebssystem gemäß einer in der Assoziationsinformation gespeicherten Directory-Struktur zu erstellen; und
ein Ausführmodul (303), das dazu konfiguriert ist, das Anwendungsprogramm in dem zweiten Betriebssystem auszuführen.

3. Mobiles Endgerät umfassend die Steuervorrichtung gemäß Anspruch 2.

4. Lesbares Speichermedium, auf dem ein Computerprogramm gespeichert ist, wobei das Computerprogramm, wenn es durch einen Prozessor ausgeführt wird, dazu konfiguriert ist, das Steuerprogramm nach Anspruch 1 zu implementieren.

## Revendications

1. Procédé de commande pour permettre des opérations d'un programme d'application dans de multiples systèmes, dans lequel le procédé de commande est applicable à un téléphone mobile comprenant au moins un premier système d'exploitation et un second système d'exploitation, et le procédé de commande comprend :
(101), l'acquisition d'informations de système du second système d'exploitation lors du démarrage d'un programme d'application dans le second système d'exploitation du téléphone mobile, dans lequel les informations de système comprennent une structure de répertoire et un niveau de système du second système d'exploitation ; (102), la détermination du fait que des informations d'association entre le programme d'application et le second système d'exploitation existent ou non, lorsqu'un des informations d'association n'existent pas, la création d'une partition de stockage pour le programme d'application dans le second système d'exploitation selon les informations de système, et lorsque la partition de stockage est créée avec succès, la création d'informations d'association entre le programme d'application et le second système d'exploitation selon les informations de système ; et lorsque des informations d'association existent, mais que le niveau de système acquis et la structure de répertoire acquise du second système d'exploitation ne correspondent pas aux informations d'association parce que les informations de système acquises sont celles du premier système d'exploitation, la création d'une partition de stockage pour le programme d'application dans le second système d'exploitation selon une structure de répertoire stockée dans les informations d'association ; et
(103), la création d'un dossier de configuration d'opération requis pour l'exécution du programme d'application dans le second système d'exploitation dans la partition de stockage, et le stockage de données requises pour l'exécution du programme d'application dans le second système d'exploitation dans le dossier de configuration d'opération, de telle sorte que le second système d'exploitation est capable d'identifier le programme d'application ; et
(104), la réalisation de l'exécution du programme d'application dans le second système d'exploitation.

2. Dispositif de commande pour permettre des opérations d'un programme d'application dans de multiples systèmes, dans lequel le dispositif de commande comprend au moins un premier système d'exploitation et un second système d'exploitation, et comprend en outre :
un module d'acquisition (301) configuré pour acquérir des informations de système du second système d'exploitation lors du démarrage d'un programme d'application dans le second système d'exploitation du dispositif de commande, dans lequel les informations de système comprennent une structure de répertoire et un niveau de système du second système d'exploitation ;
un module de création (302) configuré pour : lorsqu'il est déterminé que des informations d'association entre le programme d'application et le second système d'exploitation n'existent pas, créer une partition de stockage pour le programme d'application dans le second système d'exploitation selon les informations de système ; lorsque la partition de stockage est créée avec succès, créer des informations d'association entre le programme d'application et le second système d'exploitation selon les informations de système, créer un dossier de configuration d'opération requis pour l'exécution du programme d'application dans le second système d'exploitation dans la partition de stockage, et stocker des données requises pour l'exécution du programme d'application dans le second système d'exploitation dans le dossier de configuration d'opération, de telle sorte que le second système d'exploitation est capable d'identifier le programme d'application ; et lorsqu'il est déterminé que des informations d'association existent, mais que le niveau de système acquis et la structure de répertoire acquise du second système d'exploitation ne correspondent pas aux informations d'association parce que les informations de système acquises sont celles du premier système d'exploitation, créer une partition de stockage pour le programme d'application dans le second système d'exploitation selon une structure de répertoire stockée dans les informations d'association ; et
un module d'exécution (303) configuré pour réaliser l'exécution du programme d'application dans le second système d'exploitation.

3. Terminal mobile comprenant le dispositif de commande selon la revendication 2.

4. Support de stockage lisible stockant un programme informatique, dans lequel le programme informatique, lorsqu'il est exécuté par un processeur, est configuré pour réaliser le procédé de commande selon la revendication 1.
